# EUROPEAN PATENT APPLICATION

(11) **EP 2 412 866 A2**
(43) Date of publication of application: **01.02.2012**
(21) Application number: 11175787.8
(22) Date of filing: 28.07.2011
(51) Int. Cl.: D06F 39/02

(54) **Washing machine**

(30) Priority: 30.07.2010 KR 20100073968; 17.09.2010 KR 20100091569
(71) Applicant: Samsung Electronics Co., Ltd., Suwon-si, Gyeonggi-do 506-762 (KR)
(72) Inventor: Seo, Jin Ho, Gyeonggi-do (KR); Shin, Kyoung Seop, Seoul (KR); Back, Dong Il, Gyeonggi-do (KR)
(74) Representative: Grünecker, Kinkeldey, Stockmair & Schwanhäusser

(57) **Abstract**

A washing machine having a water supply unit provided with a branch pipe. The washing machine includes a main body, a tub provided within the main body, a water supply hose connected to a water supply source to supply water to the tub, the water supply unit including channels defined by at least one inlet and at least one outlet and at least one structure discriminated from the channels, at least one of the at least one inlet and the at least one outlet being connected to the water supply hose, and a branch pipe provided on the water supply unit to allow a portion of water introduced into the water supply unit to branch off and be discharged to the outside of the water supply unit.

## Description

### BACKGROUND

### 1. Field

Embodiments relate to a washing machine having a water supply unit provided with a branch pipe allowing a portion of water supplied to a tub to be utilized for purposes other than washing.

### 2. Description of the Related Art

In general, a washing machine is an apparatus which includes a drum to receive laundry, for example, such as clothes, and a motor to drive the drum, and performs a series of washing, rinsing and spin-drying cycles using rotation of the drum.

The washing machine is provided with a door glass on the front surface thereof such that the inside of the washing machine can be viewed. During the washing or rinsing cycle, detergents used in washing or contaminants separated from the laundry may stick to the door glass. These detergents or contaminants not only provide a bad impression to a user but also contact the laundry and thus re-contaminate the laundry while the laundry is taken out of the drum after completing washing of the laundry.

The washing machine receives water required to perform washing or rinsing of the laundry from an external water supply source. For this purpose, the washing machine is provided with water supply hoses connected to the external water supply source.

During operation of the washing machine, water containing the detergents or contaminants may flow backward to the water supply hoses. The backflow of water is introduced into the external water supply source and is then contaminates the external water supply source, thereby causing environmental problems.

### SUMMARY

Therefore, it is an aspect to provide a washing machine having a water supply unit provided with a branch pipe.

Additional aspects of the invention will be set forth in part in the description which follows and will be apparent from the description, or may be learned by practice of the invention.

In accordance with one aspect, a washing machine includes a main body, a tub provided within the main body, a water supply hose connected to a water supply source to supply water to the tub, a water supply unit including channels defined by at least one inlet and at least one outlet and at least one structure discriminated from the channels, at least one of the at least one inlet and the at least one outlet being connected to the water supply hose, and a branch pipe provided on the water supply unit to allow a portion of water introduced into the water supply unit to branch off and be discharged to the outside of the water supply unit.

The water supply unit may be a detergent supply device provided to supply detergents to the tub.

The detergent supply device may include at least one inlet pipe protruded from the at least one inlet so as to be connected to the water supply hose, and the branch pipe may branch off from the at least one inlet pipe.

The at least one inlet may include a first inlet into which water is introduced during a main washing cycle and a second inlet into which water is introduced during a preliminary washing cycle, the at least one inlet pipe may include a first inlet pipe protruded from the first inlet and a second inlet pipe protruded from the second inlet, and the branch pipe may be fixed to the second inlet pipe so as to communicate with the second inlet pipe.

The branch pipe may be extended downwards.

A cross-sectional area of the branch pipe may be smaller than a cross-sectional area of the at least one inlet pipe from which the branch pipe branches off.

A length of the second inlet pipe may be greater than a length of the first inlet pipe.

The water supply unit may be a backflow prevention device provided to prevent wash water from flowing backward and being introduced into the water supply source.

The backflow prevention device may include a case provided with the at least one inlet and the at least one outlet and a backflow blocking unit disposed within the case to block a backflow of water into the at least one inlet, and the at least one inlet may be connected to the water supply hose and the at least one outlet may be a plurality of outlets provided so as to discharge water in different directions.

The case may include a nozzle part provided with the at least one inlet and a connector part provided with the at least one outlet.

The nozzle part and the connector part may be coupled with each other by screw connection.

The backflow blocking unit may include a moving member moving within the case according to a water flow so as to selectively open and close the at least one inlet.

The backflow blocking unit may further include a separation member disposed around the at least one outlet so as to separate the moving member from the at least one outlet.

The backflow blocking unit may further include an inclined surface part formed on the inner wall of the case so as to guide the moving member to the at least one inlet.

The moving member may be a spherical ball having a designated diameter, and the diameter of the ball may be greater than a diameter of the at least one inlet.

The moving member may be closely adhered to the at least one inlet due to water pressure and close the at least one inlet when water flows backward in the direction of the at least one inlet.

The case may include an outlet pipe connected to one of the plurality of outlets and protruded to the outside of the case, and at least one of the plurality of outlets may be formed on the side wall of the outlet pipe.

The branch pipe may communicate with the at least one of the plurality of outlets formed on the side wall of the outlet pipe and be protruded to the outside of the outlet pipe.

The washing machine may further include a door to open and close the main body and a door washing hose to guide water to the rear surface of the door, and the branch pipe may be connected to the door washing hose.

In accordance with another aspect, a washing machine includes a main body, a tub provided within the main body, a water supply hose connected to a water supply source to supply water to the tub, and a backflow prevention device mounted on the water supply hose to prevent wash water in the tub from flowing backward and being introduced into the water supply source, wherein the backflow prevention device includes a backflow prevention part provided with an inlet and an outlet, an inlet channel communicating with the inlet, outlet channels communicating with the outlet, and a backflow blocking unit disposed in the backflow prevention part to prevent water from flowing backward into the inlet channel, and the outlet channels include a first outlet channel and a second outlet channel formed separately from the first outlet channel.

The second outlet channel may branch off from the first outlet channel.

The second outlet channel may directly communicate with the backflow prevention part.

In accordance with another aspect, a washing machine includes a main body, a tub provided within the main body, a water supply hose connected to a water supply source to supply water to the tub, and a detergent supply device connected to the water supply hose to supply detergents to the tub, wherein the detergent supply device includes a housing, inlet pipes protruded to the outside of the housing so as to be connected to the water supply hose, and a branch pipe branching off from at least one of the inlet pipes.

In accordance with another aspect, a washing machine includes a main body provided with an inlet through which laundry is put into the main body, a tub formed within the main body and provided with an opening corresponding to the inlet, a door to open and close the inlet, a gasket to shield a space between the inlet and the opening, a water supply hose connected to a water supply source to supply water to the tub, a door washing hose connected to a wash water spray hole formed on the gasket, and a backflow prevention device mounted on the water supply hose to prevent wash water from flowing backward along the water supply hose and being introduced into the water supply source, wherein the backflow prevention device includes a case, an inlet pipe and an outlet pipe communicating with the inside of the case and protruded to the outside of the case, a backflow blocking unit disposed at the inside of the case, and a branch pipe forming a channel separately from the outlet pipe, and the branch pipe is connected to the door washing hose.

In accordance with another aspect, a detergent supply device includes a housing, a detergent container provided within the housing so as to receive detergents, inlet pipes protruded to the outside of the housing so as to supply water to the detergent container, and a branch pipe fixed to at least one of the inlet pipes so as to allow a portion of water introduced into the inlet pipe to branch off.

In accordance with a further aspect, a backflow prevention device includes a case including a nozzle part provided with an inlet and a connector part provided with an outlet, a backflow blocking unit disposed within the case to prevent water within the case from flowing backward and being introduced into the inlet, and a branch hole forming a channel separately from the outlet, wherein the nozzle part and the connector part are coupled with each other by screw connection.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a cross-sectional view illustrating a main configuration of a washing machine in accordance with one embodiment;
FIG. 2 is an exploded perspective view of a detergent supply device of the washing machine in accordance with the embodiment;
FIG. 3A is a plan view illustrating water supply channels of the detergent supply device shown in FIG. 2;
FIG. 3B is a cross-sectional view illustrating an inlet pipe and a branch pipe of the detergent supply device shown in FIG. 2;
FIG. 4A is a cross-sectional view illustrating a main configuration of a washing machine in accordance with another embodiment;
FIG. 4B is a view illustrating connection between a backflow prevention device and a detergent supply device of the washing machine in accordance with the embodiment;
FIG. 5 is an exploded perspective view of the backflow prevention device in accordance with the embodiment;
FIG. 6A is a cross-sectional view of the backflow prevention device in accordance with the embodiment;
FIG. 6B is a cross-sectional view of a backflow prevention device in accordance with a further embodiment; and
FIGS. 7A and 7B are views illustrating operation of a backflow prevention device in accordance with one embodiment.

### DETAILED DESCRIPTION

Reference will now be made in detail to the embodiments, examples of which are illustrated in the accompanying drawings, wherein like reference numerals refer to like elements throughout.

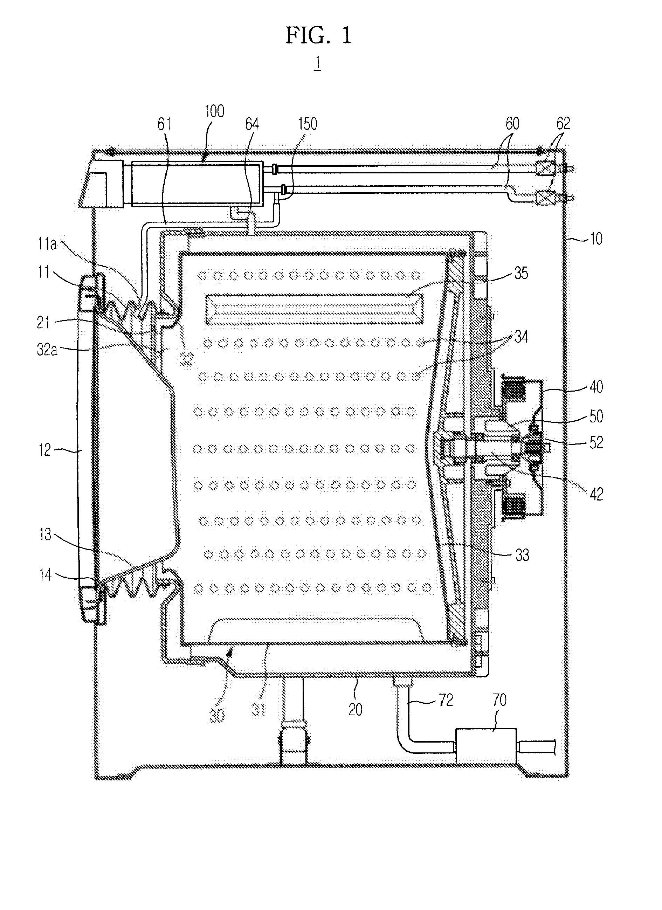

FIG. 1 is a cross-sectional view illustrating a main configuration of a washing machine in accordance with one embodiment.

As shown in FIG. 1, a washing machine 1 in accordance with this embodiment includes a main body 10 forming the external appearance of the washing machine 1, a tub 20 disposed within the main body 10, a drum 30 rotatably disposed within the tub 20, and a motor 40 to drive the drum 30.

An inlet 14 through which laundry is put into the drum 30 is formed through the front surface portion of the main body 10, and is opened and closed by a door 12 installed on the front surface portion of the main body 10. Further, a door glass 13 made of a transparent material is mounted along the inner circumferential surface of the door 12 such that a user may view the interior of the drum 30 with the naked eye.

An opening 21 is formed on the front surface portion of the tub 20 at a position corresponding to the inlet 14 of the main body 10. In order to shield a space between the inlet 14 of the main body 10 and the opening 21 of the tub 20, a gasket 11 connecting the inlet 14 and the opening 21 is installed. The gasket 11 is fixed to the main body 10 and the tub 20, respectively. The gasket 11 may be made of an elastic material so as to cope with vibration of the tub 20.

Water supply hoses 60 to supply wash water to the tub 20 are installed above the tub 20. One end of each of the water supply hoses 60 is connected to an external water supply source (not shown) and the other end of each of the water supply hoses 60 is connected to a detergent supply device 100. Here, the other end of each of the water supply hoses 60 may be connected directly to the detergent supply device 100.

The detergent supply device 100 is connected to the tub 20 through a connection hose 64. Water supplied through the water supply hoses 60 is supplied to the detergent supply device 100 and is mixed with detergents in the detergent supply device 100. Then, water containing the detergents is supplied to the inside of the tub 20.

A drain pump 70 and a drain pipe 72 to discharge the water in the tub 20 to the outside of the main body 10 are installed under the tub 20.

The drum 30 includes a cylindrical member 31, a front plate 32 disposed at the front part of the cylindrical member 31, and a rear plate 33 disposed at the rear part of the cylindrical member 31. An opening 32a through which the laundry is put into the drum 30 is formed on the front plate 32, and a drive shaft 42 to transmit drive force of the motor 40 is connected to the rear plate 33.

A bearing housing 50 is installed on the rear wall of the tub 20 so as to rotatably support the drive shaft 42. The bearing housing 50 is made of an aluminum alloy and is inserted into the rear wall of the tub 20 when the tub 20 is formed through injection molding. Bearings 52 are installed between the bearing housing 50 and the drive shaft 42 so as to efficiently rotate the drive shaft 42.

The drive shaft 42 is disposed between the drum 30 and the motor 40. One end of the drive shaft 42 is connected to the rear plate 33 of the drum 30, and the other end of the drive shaft 42 is extended to the outside of the rear wall of the tub 20. When the motor 40 drives the drive shaft 42, the drum 30 connected to the drive shaft 42 is rotated around the drive shaft 42.

A plurality of through holes 34 to circulate wash water is formed through the circumferential surface of the drum 30, and a plurality of lifters 35 to tumble laundry during rotation of the drum 30 is installed on the inner circumferential surface of the drum 30.

During the washing and rinsing cycles, the motor 40 rotates the drum 30 at a low velocity in regular and reverse directions. As the laundry in the drum 30 is repeatedly tumbled due to rotation of the drum 30, contaminants are removed from the laundry.

During the spin-drying cycle, the motor 40 rotates the drum at a high velocity in one direction, thereby removing water from the laundry using centrifugal force applied to the laundry.

A device which allows water supplied from the external water supply source (not shown) to pass through the inside of the device and includes at least one structure except for internal channels may be defined as a water supply unit. That is, the water supply unit is provided with an inlet and an outlet and includes internal channels and structures discriminated from the channels, and at least one of the inlet and the outlet is connected to the water supply hose 60. For example, since the detergent supply device 100 is provided with inlets 129 and an outlet 131 and includes internal channels along which water flows and structures discriminated from the channels, for example, such as a siphon device 147, a detergent container 140, and guide rails 132, and the inlets 129 of the detergent supply device 100 are connected to the water supply hoses 60, the detergent supply device 100 may be referred to as a water supply unit. On the other hand, since a Y-shaped connector or a T-shaped connector mounted on the water supply hoses 60 includes no structure discriminated from internal channels in addition to internal walls forming the internal channels, such a connector may not be referred to as a water supply unit. In addition to the detergent supply device 100, a steam generator (not shown), a backflow prevention device (not shown), and water supply valves 62 may be referred to as water supply units.

Detergents or contaminants removed from the laundry may stick to the door glass 13 during the washing and rinsing cycles. When the laundry is taken out of the drum 30 after washing of the laundry, the laundry comes into contact with the door glass 13 and thus may be re-contaminated with the detergents or the contaminants.

Therefore, the washing machine 1 includes a door washing hose 61 to guide water from the water supply source (not shown) to the door glass 13 so as to wash the door glass 13. A spray hole 11 a to spray water toward the door glass 13 is formed on the gasket 11, and the door washing hose 61 is connected to the spray hole 11a. The door washing hose 61 may branch off from the water supply hose 60 or be connected to the external water supply source (not shown) separately from the water supply hoses 60.

In order to allow the door washing hose 61 to branch off from the water supply hose 60 or to connect the door washing hose 61 to the external water supply source (not shown) separately from the water supply hoses 60, a separate component is required. Particularly, if a separate branch component, for example, such as the Y-shaped connector or the T-shaped connector, is mounted on the water supply hose 60 and then the door washing hose 61 is connected to the separate branch component, production costs may be increased and water leakage at a connection portion between the components may occur.

Therefore, the washing machine 1 includes the detergent supply device 100 provided with a branch pipe 150 to supply water to the door washing hose 61.

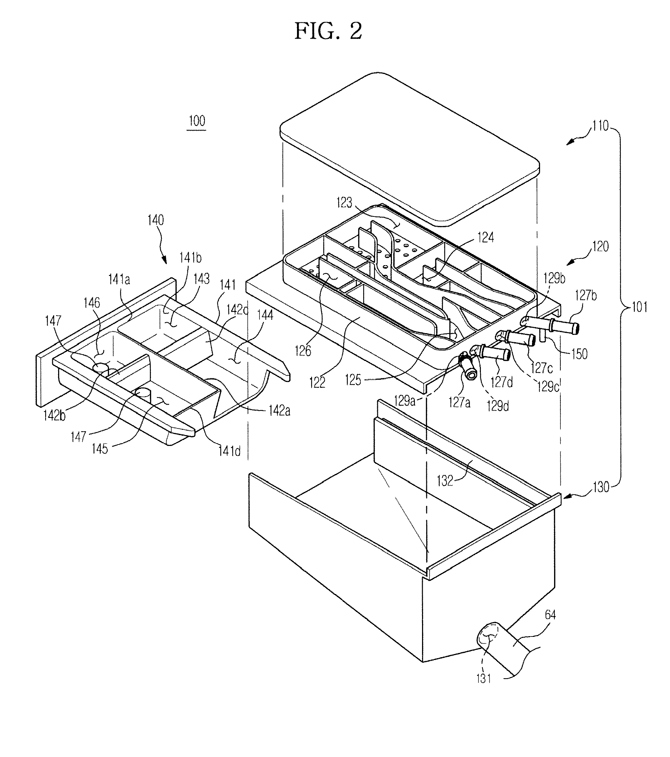

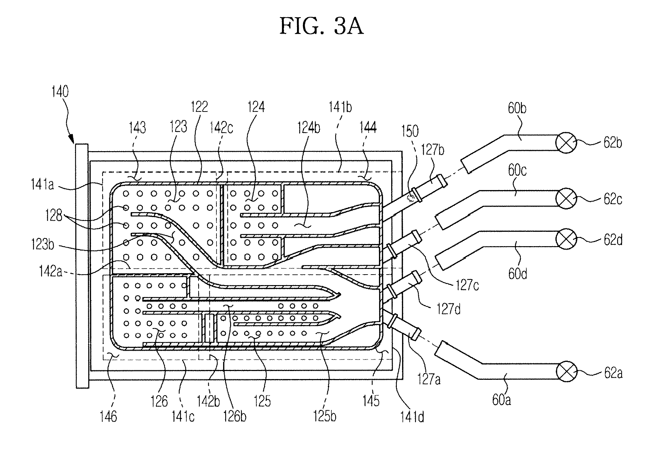

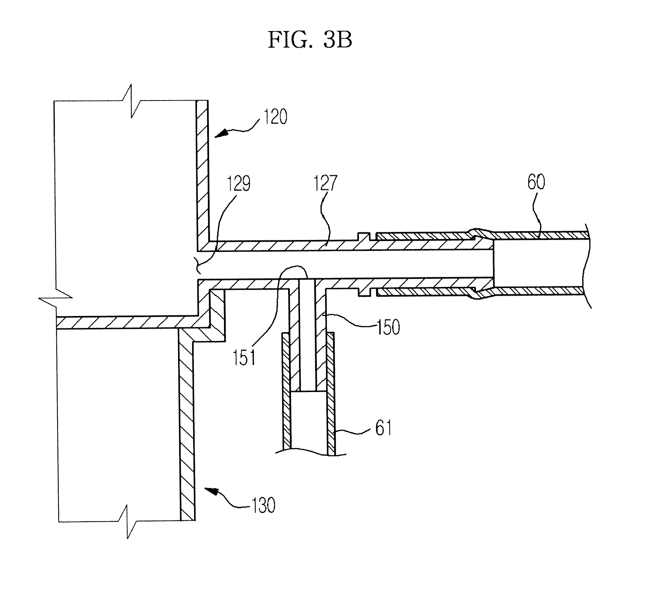

FIG. 2 is an exploded perspective view of the detergent supply device of the washing machine in accordance with the embodiment, FIG. 3A is a plan view illustrating water supply channels of the detergent supply device shown in FIG. 2, and FIG. 3B is a cross-sectional view illustrating an inlet pipe and a branch pipe of the detergent supply device shown in FIG. 2.

As shown in FIGS. 2 to 3B, the detergent supply device 100 includes a housing 101, the front surface of which is opened, and a detergent container 140 detachably connected to the front surface of the housing 101. The detergent container 140 includes detergent storage parts 143, 144, 145 and 146 formed so as to be divided from one another by a front surface 141 a, a rear surface 141 d, side walls 141 b and 141 c of a tray 141, and diaphragms 142a, 142b and 142c.

The housing 101 includes an upper housing part 120, a lower housing part 130, and a cover 110 to cover the upper portion of the upper housing part 120. First, second, third and fourth water supply parts 123, 124, 125 and 126 divided from one another by a plurality of diaphragms, are provided within a rectangular side wall 122 on the front surface of the upper housing part 120. The first, second, third and fourth water supply parts 123, 124, 125 and 126, are provided with inlets 129a, 129b, 129c and 129d respectively connected to water supply valves 62a, 62b, 62c and 62d and the water supply hoses 60.

A plurality of through holes 128 to supply water, introduced into the respective water supply parts 123, 124, 125 and 126 through the inlets 129a, 129b, 129c and 129d, to the inside of the detergent container 140, are provided on the bottom of the upper housing part 120. The through holes 128 are properly distributed along channels 123b, 124b, 125b and 126d formed in the respective water supply parts 123, 124, 125 and 126.

The lower housing part 130 is provided with an outlet 131 connected to the connection hose 64 shown in FIG. 1 so as to supply water having passed through the through holes 128 of the upper housing part 120 to the tub 20 shown in FIG. 1. The outlet 131 is sloped downwards at the rear portion thereof such that the water easily flows to the outlet 131. Guide rails 132 are provided on both side surfaces of the lower housing part 130 such that the detergent container 140 may be slidably connected to the lower housing part 130 along the guide rails 132.

The detergent container 140 includes the tray 141, the upper surface portion of which is opened, and the tray 141 is divided into a main washing detergent storage part 143, a bleaching detergent storage part 145, and a rinsing detergent storage part 146 by the front surface 141 a, the rear surface 141 d, the side walls 141 b and 141 c, and the diaphragms 142a, 142b and 142c. Further, a preliminary washing detergent storage part 144 used during a preliminary washing cycle may be selectively installed.

The rear portion of the main washing detergent storage part 143 is opened such that supplied water is discharged to the outlet 131 via the first water supply part 123 and the through holes 128. A siphon device 147 to discharge supplied water to the outlet 131 is formed on the bottom of each of the bleaching detergent storage part 145 and the rinsing detergent storage part 146. The bottoms of the main washing detergent storage part 143, the preliminary washing detergent storage part 144, the bleaching detergent storage part 145, and the rinsing detergent storage part 146 are sloped downwards at the rear portions thereof.

Water supplied from the external water supply source through the water supply valves 62 and the water supply hoses 60 is supplied to the inside of the detergent supply device 100 through the respective inlets 129a, 129b, 129c, and 129d.

As the water supplied to the inside of the detergent supply device 100 passes through the first, second, third, and fourth water supply parts 123, 124, 125 and 126 and the detergent storage parts 143, 144, 145, and 146 according to the washing, rinsing, and spin-drying cycles, the water is mixed with detergents and is then supplied to the tub 20 shown in FIG. 1 through the outlet 131 and the connection hose 64.

During the preliminary washing cycle, water supplied through the water supply valve 62b is introduced into the through holes 128 disposed in the second water supply part 124. The water is mixed with a detergent stored in the preliminary washing detergent storage part 144 and is then supplied to the tub 20.

During the main washing cycle, water supplied through the water supply valves 62a and 62c is introduced into the through holes 128 disposed in the first water supply part 123. The water is mixed with a detergent stored in the main washing detergent storage part 143 and is then supplied to the tub 20.

The rinsing cycle is repeated twice. During the first rinsing cycle, water supplied through the water supply valve 62d is mixed with a bleaching agent via the third water supply part 125 and the bleaching detergent storage part 145 and is then supplied to the tub 20. During the second rinsing cycle, water supplied through the water supply valves 62a and 62d is mixed with a fabric softener via the fourth water supply part 126 and the rinsing detergent storage part 146 and is then supplied to the tub 20.

The detergent supply device 100 is provided with first, second, third, and fourth inlet pipes 127a, 127b, 127c, and 127d protruded outward so as to connect the respective inlets 129a, 129b, 129c, and 129d to the water supply hoses 60.

Since the branch pipe 150 is connected to the door washing hose 61, water introduced into the door washing hose 61 through the branch pipe 150 may contain no detergent such that water containing no detergent is introduced into the branch pipe 150. Therefore, the branch pipe 150 may branch off from at least one of the first, second, third, and fourth inlet pipes 127a, 127b, 127c, and 127d.

A branch hole 151 is formed on the side wall of the at least one of the first, second, third, and fourth inlet pipes 127a, 127b, 127c and 127d, and the branch pipe 150 is extended to the outside of the at least one of the first, second, third, and fourth inlet pipes 127a, 127b, 127c, and 127d so as to communicate with the branch hole 151. The branch pipe 150 may be fixed to the outside of the at least one of the first, second, third, and fourth inlet pipes 127a, 127b, 127c, and 127d so as to be extended downwards. This is carried out in consideration of an assembly process between the door washing hose 61 and the branch pipe 150 and overall space utility.

A portion of water supplied to the first, second, third, or fourth inlet pipe 127a, 127b, 127c, and 127d through each of the water supply hoses 60 branches off into the branch pipe 150 and is then introduced into the door washing hose 61, and the remaining portion of the water is supplied to the tub 20 shown in FIG. 1 via the detergent supply device 100. Since washing or rinsing of laundry requires a greater amount of water than that of water required during washing of the door glass 13, an amount of water supplied to the tub 20 may be greater than an amount of water introduced into the door washing hose 61. Therefore, a cross-sectional area of the branch pipe 150 may be smaller than a cross-sectional area of the inlet pipes 127a, 127b, 127c, and 127d.

The branch pipe 150 may be connected to the second inlet pipe 127b such that a portion of water introduced through a second water supply hose 60b branches off. Therefore, a portion of water introduced into the second inlet pipe 127b during the preliminary washing cycle may be supplied to the door washing hose 61 through the branch pipe 51. Since the preliminary washing cycle is carried out prior to the main washing cycle and less water is introduced into the second inlet pipe 127b than into the first inlet pipe 127a throughout the overall process from the washing cycle to the spin-drying cycle, the branch pipe 150 branches off from the second inlet pipe 127b, thereby allowing water to be more effectively used. Further, the second water supply valve 62b is opened so that water is introduced into the door washing hose 61 prior to completion of the spin-drying cycle. Here, a length of the second inlet pipe 127b is longer than that of the first, third, and fourth inlet pipes 127a, 127c, and 127d so that the branch pipe 150 may be fixed to the side wall of the second inlet pipe 127b.

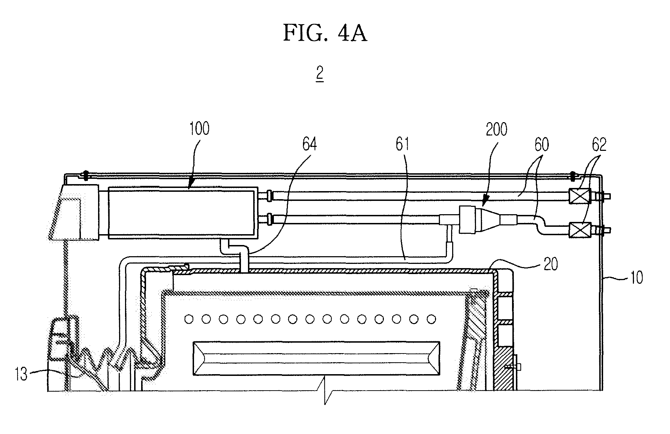

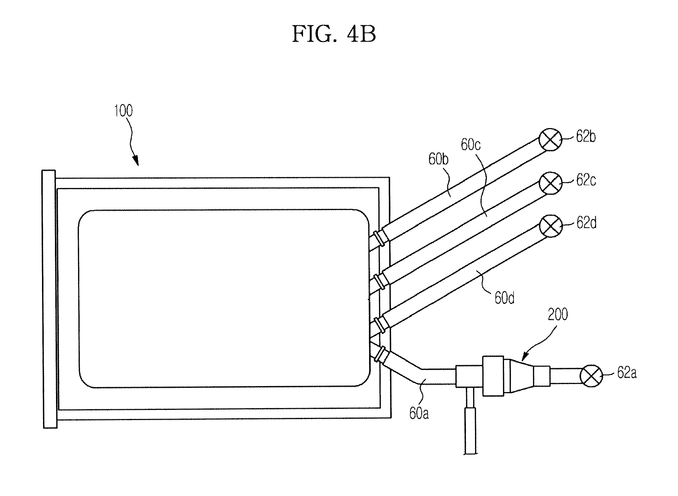

FIG. 4A is a cross-sectional view illustrating a main configuration of a washing machine in accordance with another embodiment and FIG. 4B is a view illustrating connection between a backflow prevention device and a detergent supply device of the washing machine in accordance with the embodiment.

As shown in FIGS. 4A and 4B, a washing machine 2 in accordance with this embodiment includes a main body 10, a tub 20, water supply hoses 60, water supply valves 62, a detergent supply device 100, and a door washing hose 61. Such components in this embodiment are substantially the same as or similar to those in the embodiment shown in FIG. 1, and a detailed description thereof will thus be omitted because it is considered to be unnecessary.

Water containing detergents or contaminants may flow backward along the water supply hoses 60 and be introduced into a water supply source (not shown). In order to prevent such a backflow, the washing machine 2 includes a backflow prevention device 200 mounted on the water supply hose 60.

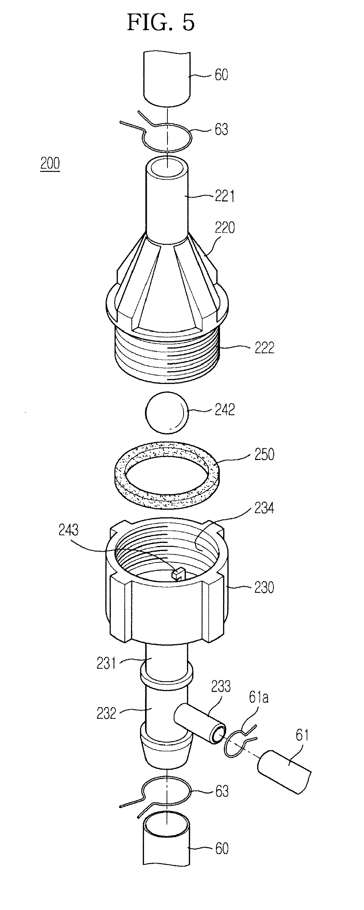

Since the backflow prevention device 200 is provided with an inlet and an outlet and includes internal channels along which water flows and a structure discriminated from the channels, such as a moving member 242 (with reference to FIG. 5), and the inlet of the backflow prevention device 200 is connected to the water supply hose 60, the backflow prevention device 200 corresponds to a water supply unit. Therefore, the backflow prevention device 200 includes a branched structure connected to the door washing hose 61.

The backflow prevention device 200 may be mounted on at least one of first, second, third, and fourth water supply hoses 60a, 60b, 60c, and 60d. For example, if the backflow prevention device 200 is mounted on the fourth water supply hose 60d, the backflow prevention device 200 prevents a bleaching agent or a fabric rinse used in rinsing of laundry from flowing backward along the fourth water supply hose 60d and being introducing into the water supply source. Although the backflow prevention device 200 is mounted on any one of the water supply hoses 60a, 60b, 60c, and 60d, the backflow prevention device 200 may prevent contamination of the water supply source. However, since the main washing cycle is generally carried out while the washing machine 2 is used, the backflow prevention device 200 may be mounted on the first water supply hose 60a.

A portion of water introduced into the backflow prevention device 200 branches off within the backflow prevention device 200 and is introduced into the door washing hose 61. The water introduced into the door washing hose 61 is guided to the door glass 31 and is used to wash the door glass 31.

Supply of water to the water supply hose 60 on which the backflow prevention device 200 is mounted may be carried out before the spin-drying cycle or during the spin-drying cycle. Hereinafter, the backflow prevention device 200 mounted on the first water supply hose 60a will be described.

The first water supply valve 62a may be opened so as to supply water to the first water supply hose 60a. A portion of the water supplied to the first water supply hose 60a is branched off within the backflow prevention device 200 and is supplied to the detergent supply device 100, and the remaining portion of the water is guided to the door glass 13 through the door washing hose 61. The water supplied to the detergent supply device 100 is supplied to the tub 20 through the connection hose 64, and the water guided to the door glass 13 is used to wash the door glass 13. Here, an amount of the water branched off into the door washing hose 61 may be about 40% of the total amount of water supplied to the backflow prevention device 200.

A control unit (not shown) opens the first water supply valve 62a so as to supply water to the first water supply hose 60a at least five minutes before the spin-drying cycle is terminated. A time for which water supply is carried out is about 10 seconds, and an amount of water supplied to the first water supply hose 60a for this time may be about 1 liter (1l). 1l of water is divided within the backflow prevention device 200 so that 600ml of water is supplied to the tub 20 through the detergent supply device 100 and 400ml of water is guided to the door glass 13 through the door washing hose 61 and used to wash the door glass 13. Here, the water supplied to the tub 20 is discharged to the outside through the spin-drying cycle.

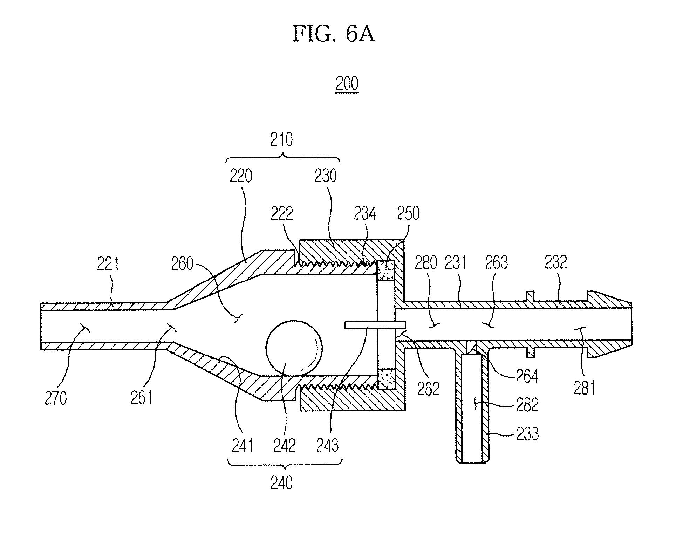

FIG. 5 is an exploded perspective view of the backflow prevention device in accordance with the embodiment and FIG. 6A is a cross-sectional view of the backflow prevention device in accordance with the embodiment.

As shown in FIGS. 5 and 6A, the backflow prevention device 200 includes a case 210 provided with an inlet 261 and an outlet 262 and a backflow blocking unit 240 disposed within the case 210.

The case 210 forms the external appearance of the backflow prevention device 200, and a backflow prevention part 260 communicating with the inlet 261 and the outlet 262 is provided within the case 210. The backflow blocking unit 240 is disposed in the backflow prevention part 260.

The case 210 includes a nozzle part 220 on which the inlet 261 is formed, and a connector part 230 on which the outlet 262 is formed. The backflow prevention part 260 is defined by the inner walls of the nozzle part 220 and the connector part 230. The nozzle part 220 and the connector part 230 are coupled through screw connection, thus forming the case 210. In order to achieve screw connection, screw threads 222 and 234 having a corresponding shape may be formed on the nozzle part 220 and the connector part 230.

In order to prevent water leakage at a connection area between the nozzle part 220 and the connection part 230, a sealing member 250 may be disposed between the nozzle part 220 and the connector part 230. The sealing member 250 may be a ring-shaped packing made of an elastic material, for example, such as rubber.

The inlet 261 is formed at one side of the nozzle part 220. The inlet 261 has a circular cross-section. The inlet 261 communicates with the water supply hose 60, and water in the water supply hose 60 is introduced into the backflow prevention part 260 through the inlet 261.

The nozzle part 220 includes an inlet pipe 221 communicating with the inlet 261 and provided with one end fixed to the nozzle part 220 and the other end protruded to a designated length to the outside of the nozzle part 220. The inlet pipe 221 may be formed integrally with the nozzle part 220, or be formed separately and is then connected to the nozzle part 220.

The water supply hose 60 is made of an elastic material, for example, such as rubber, and is connected to the inlet pipe 221 such that the water supply hose 60 surrounds a part of one end of the inlet pipe 221. Here, a clamp 63 to fix the water supply hose 60 to the inlet pipe 221 may be mounted.

An inlet channel 270 is defined by the inlet 261 and the inlet pipe 221. Water supplied through the water supply hose 60 is introduced into the backflow prevention part 260 via the inlet channel 270. The water introduced into the backflow prevention part 260 is discharged to the outside through the outlet 262.

The outlet 262 is formed at one side of the connector part 230. The connector part 230 includes an outlet pipe 231 communicating with the outlet 262 and provided with one end fixed to the connector part 262 and the other end protruded to a designated length to the outside of the connector part 230. The outlet pipe 262 may be formed integrally with the connector part 230, or be formed separately and is then connected to the connector part 230.

An outlet channel 280 is defined by the outlet 262 and the outlet pipe 231. The water introduced into the backflow prevention part 260 is discharged to the outside through the outlet channel 280.

The outlet 262 is divided into a first outlet 263 and a second outlet 264. The water introduced into the backflow prevention part 260 is branched off by the first outlet 263 and the second outlet 264 and is then discharged to the outside. Water discharged through the first outlet 263 is supplied to the tub 20 through the water supply hose 60. Here, the second outlet 264 is a branch outlet.

The outlet pipe 231 is divided into a first outlet pipe 232 communicating with the first outlet 263 and protruded to a designated length to the outside of the connector part 230, and a second outlet pipe 233 communicating with the second outlet pipe 264 and protruded to a designated length to the outside of the connector part 230. A first outlet channel 281 is defined by the first outlet 262 and the first outlet pipe 232, and a second outlet channel 282 is defined by the second outlet 264 and the second outlet pipe 233. Such a channel branched structure of the backflow prevention device 200 reduces production costs, as compared with mounting of a separate branch component on the water supply hose 60, and eliminates additional water leakage points generated due to mounting of the separate branch component. Here, the second outlet pipe 233 is a branch pipe.

Amounts of water flowing along the first outlet channel 281 and the second outlet channel 282 are determined by cross-sectional areas of the first outlet 263 and the second outlet 264. Therefore, the cross-sectional areas of the first outlet 263 and the second outlet 264 are adjusted according to usage purposes of the respective channels 281 and 282.

The first outlet channel 281 is connected to the water supply hose 60. Therefore, water supplied to the water supply hose 60 may sequentially pass through the inlet channel 270, the backflow prevention part 260 and the first outlet channel 281, and then be supplied to the tub 20.

The water supply hose 60 is connected to the first outlet pipe 232 such that the water supply hose 60 surrounds a part of one end of the first outlet pipe 232. In order to fix the water supply hose 60 to the first outlet pipe 232, the clamp 63 is provided.

The second outlet 264 is formed on the side wall of the first outlet pipe 232, and the second outlet pipe 233 is fixed to the side wall of the first outlet pipe 232 and protruded to the outside of the connector part 230. Therefore, a portion of water passing through the first outlet pipe 232 branches off into the second outlet 264 and is introduced into the second outlet pipe 233.

The second outlet pipe 233 is connected to the door washing hose 61. Therefore, water supplied to the water supply hose 60 may sequentially pass through the inlet channel 270, the backflow prevention part 260 and the second outlet channel 282, and then be guided to the door glass 13.

The door washing hose 61 is connected to the second outlet pipe 233 such that the door washing hose 61 surrounds a part of one end of the second outlet pipe 233. In order to fix the door washing hose 61 to the second outlet pipe 233, a clamp 61 a is provided.

The backflow blocking unit 240 is disposed within the backflow prevention part 260 and prevents water introduced into the backflow prevention part 260 from flowing backward and being introduced into the inlet channel 270. The backflow blocking unit 240 includes a moving member 242 movably disposed in the backflow prevention part 260.

The moving member 242 moves within the backflow prevention part 260 due to a flow of water within the backflow prevention part 260, thereby selectively opening and closing the inlet 261. When water is introduced into the inlet 261 through the inlet channel 270, the moving member 242 moves in the direction of the outlet 262 and thus opens the inlet 261. On the other hand, when water is introduced into the outlet 262 through the outlet channel 280, the moving member 242 moves in the direction of the inlet 261 and thus closes the inlet 261.

Since the cross-section of the inlet 261 is circular, the moving member 242 may be a spherical ball having a designated diameter so as to be closely adhered to the inlet 261. The diameter of the ball is at least greater than the diameter of the inlet 261.

The backflow blocking unit 240 includes an inclined surface part 241 inclined toward the inlet 261 so as to guide the moving member 242 to the inlet 261 when water introduced into the backflow prevention part 260 moves from the outlet 262 to the inlet 261.

One end of the inclined surface part 241 is separated from the outlet 262 by a designated distance and the other end of the inclined surface part 241 is located on the frame of the inlet 261. Further, the inclined surface part 241 may be formed on at least one of the inner wall of the nozzle part 220 and the inner wall of the connector part 230.

While the inlet 261 is selectively opened and closed, the outlet 262 needs to maintain an opened state at all times. Since the moving member 242 moves in the flow direction of water within the backflow prevention part 260, the moving member 242 may close the outlet 262 when the water flows from the inlet 261 to the outlet 262. Therefore, in order to prevent the moving member 242 from closing the outlet 262, the backflow blocking unit 240 includes a separation member 243 to separate the moving member 242 from the outlet 262 by a designated distance so as to prevent the moving member 242 from closing the outlet 262.

The separation member 243 is disposed around the outlet 262 and protruded to the inside of the backflow prevention part 260 by a designated distance. Therefore, the moving member 242 may not approach the outlet 262 by the designated distance or less due to the separation member 243. The separation member 243 may be fixed to one of the nozzle part 220 and the connector part 230. The separation member 243 has the shape of a protruded rib.

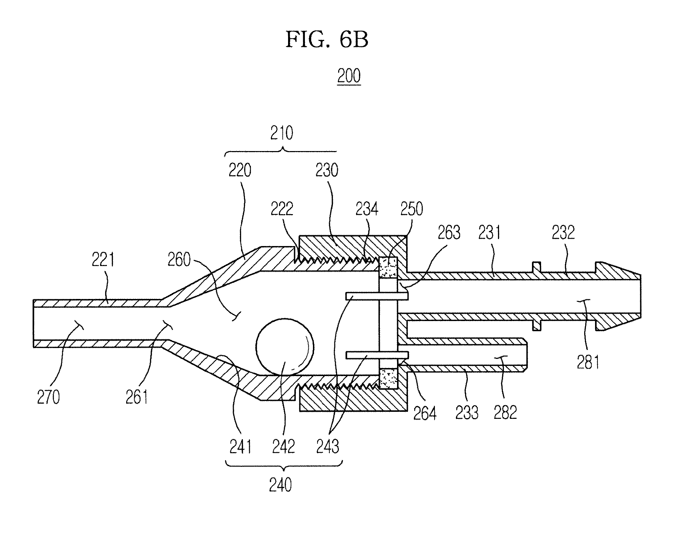

FIG. 6B is a cross-sectional view of a backflow prevention device in accordance with a further embodiment.

As shown in FIG. 6B, a first outlet 263 and a second outlet 264 directly communicate with a backflow prevention part 260 and a second outlet pipe 233 is formed separately from a first outlet pipe 232. The first outlet pipe 232 and the second outlet pipe 233 are fixed to a connector part 230 by a designated distance between the first outlet pipe 232 and the second outlet pipe 233. Here, a plurality of separation members 243 is provided around the first outlet pipe 232 and the second outlet pipe 233, respectively.

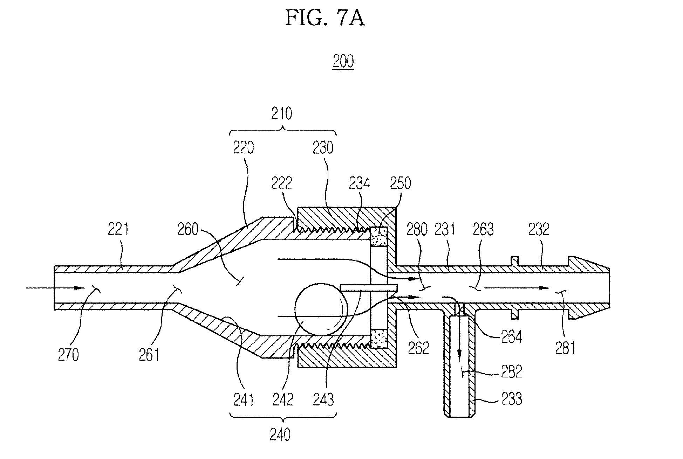

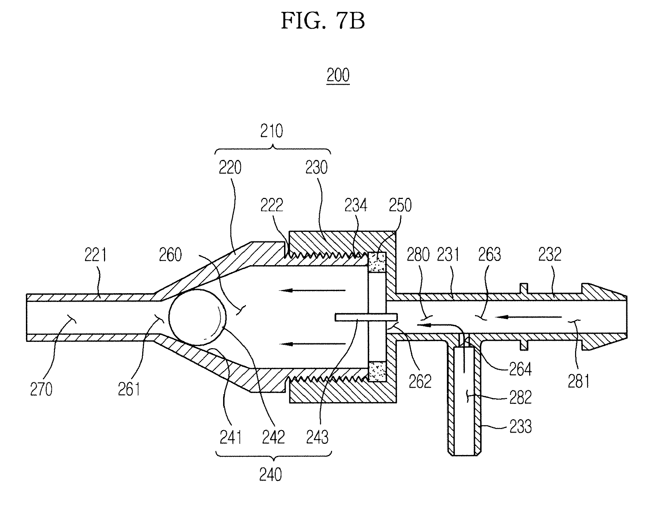

FIGS. 7A and 7B are views illustrating operation of a backflow prevention device in accordance with one embodiment.

As shown in FIG. 7A, when water is introduced into the backflow prevention part 260 through the inlet channel 270, the moving member 242 moves to the outlet 262 due to a water flow. Since the separation member 243 is disposed around the outlet 262, the moving member 242 does not close the outlet 262. Therefore, the water introduced into the backflow prevention part 260 is discharged to the outside through the outlet channel 280 regardless of movement of the moving member 242. Here, the water is branched off into the first outlet channel 281 and the second outlet channel 282. Water introduced into the first outlet channel 281 is supplied to the tub 20, and water introduced into the second outlet channel 282 is guided to the door glass 13 shown in FIG. 1 and used to wash the door glass 13.

As shown in FIG. 7B, water may flow backward through the outlet 262 and be introduced into the backflow prevention part 260. The moving member 242 together with water flowing toward the inlet 261 moves to the inlet 261. The moving member 242 moves along the inclined surface part 242 and closes the inlet 261 and thus water within the backflow prevention part 260 does not flowing toward the inlet channel 270.

When the moving member 242 closes the inlet 261, a pressure difference between the inlet channel 270 and the backflow prevention part 260 occurs. Therefore, force in the direction of the inlet channel 270 is applied to the moving member 242 due to such a pressure difference, and the moving member 242 maintains the state of being closely adhered to the inlet 261 by the force.

When the water introduced into the backflow prevention part 260 is discharged to the outside through the outlet 262, the force applied to the moving member 242 is eliminated, and thus the moving member 242 opens the inlet 261.

As is apparent from the above description, a washing machine in accordance with one embodiment allows a branch pipe provided on a water supply unit, for example, such as a detergent supply device or a backflow prevention device, to guide water to a door glass, thereby maintaining the door glass in a clean state. Further, the washing machine does not use a separate branched structure, thereby reducing the number of necessary parts and thus reducing production costs. Moreover, the washing machine reduces the number of the necessary parts and thus simplifies an assembly process, and reduces the number of water leakage points between the parts and thus has improved durability.

Further, the washing machine prevents a backflow of water along a water supply hose, thereby preventing water containing detergents or contaminants from flowing backward into an external water supply source during operation of the washing machine. Therefore, environmental problems, for example, such as contamination of the water supply source due to the backflow, may be solved.

Although a few embodiments have been shown and described, it would be appreciated by those skilled in the art that changes may be made in these embodiments without departing from the principles and spirit of the invention, the scope of which is defined in the claims and their equivalents.

## Claims

1. A washing machine comprising:
a main body;
a tub provided within the main body;
a water supply hose connected to a water supply source to supply water to the tub;
a water supply unit including channels defined by at least one inlet and at least one outlet and at least one structure discriminated from the channels, at least one of the at least one inlet and the at least one outlet being connected to the water supply hose; and
a branch pipe provided on the water supply unit to allow a portion of water introduced into the water supply unit to branch off and thus be discharged to the outside of the water supply unit.

2. The washing machine according to claim 1, wherein the water supply unit is a detergent supply device provided to supply detergents to the tub.

3. The washing machine according to claim 2, wherein:
the detergent supply device includes at least one inlet pipe protruded from the at least one inlet so as to be connected to the water supply hose; and
the branch pipe branches off from the at least one inlet pipe.

4. The washing machine according to claim 3, wherein:
the at least one inlet includes a first inlet into which water is introduced during a main washing cycle and a second inlet into which water is introduced during a preliminary washing cycle;
the at least one inlet pipe includes a first inlet pipe protruded from the first inlet and a second inlet pipe protruded from the second inlet; and
the branch pipe is fixed to the second inlet pipe so as to communicate with the second inlet pipe.

5. The washing machine according to claim 3, wherein a cross-sectional area of the branch pipe is smaller than a cross-sectional area of the at least one inlet pipe from which the branch pipe branches off.

6. The washing machine according to claim 1, wherein the water supply unit is a backflow prevention device provided to prevent wash water from flowing backward and being introduced into the water supply source.

7. The washing machine according to claim 6, wherein:
the backflow prevention device includes a case provided with the at least one inlet and the at least one outlet and a backflow blocking unit disposed within the case to block a backflow of water into the at least one inlet; and
the at least one inlet is connected to the water supply hose and the at least one outlet is a plurality of outlets provided so as to discharge water in different directions.

8. The washing machine according to claim 7, wherein the case includes a nozzle part provided with the at least one inlet and a connector part provided with the at least one outlet.

9. The washing machine according to claim 8, wherein the nozzle part and the connector part are coupled with each other by screw connection.

10. The washing machine according to claim 7, wherein the backflow blocking unit includes a moving member moving within the case according to a water flow so as to selectively open and close the at least one inlet.

11. The washing machine according to claim 10, wherein the backflow blocking unit further includes a separation member disposed around the at least one outlet so as to separate the moving member from the at least one outlet.

12. The washing machine according to claim 10, wherein the backflow blocking unit further includes an inclined surface part formed on the inner wall of the case so as to guide the moving member to the at least one inlet.

13. The washing machine according to claim 10, wherein:
the moving member is a spherical ball having a designated diameter; and
the diameter of the ball is greater than a diameter of the at least one inlet.

14. The washing machine according to claim 7, wherein:
the case includes an outlet pipe connected to one of the plurality of outlets and protruded to the outside of the case; and
at least one of the plurality of outlets is formed on the side wall of the outlet pipe.

15. The washing machine according to claim 14, wherein the branch pipe communicates with the at least one of the plurality of outlets formed on the side wall of the outlet pipe and is protruded to the outside of the outlet pipe
